(19) Europäisches Patentamt
European Patent Office
Office européen des brevets

(11) **EP 1 683 284 B1**

(12) **EUROPEAN PATENT SPECIFICATION**

(45) Date of publication and mention
of the grant of the patent:
**11.02.2009 Bulletin 2009/07**

(51) Int Cl.:
*H04B 10/17* (2006.01)          *H04J 14/06* (2006.01)
*G02B 5/30* (2006.01)

(21) Application number: **03818950.2**

(22) Date of filing: **07.11.2003**

(86) International application number:
**PCT/FI2003/000848**

(87) International publication number:
**WO 2005/046095 (19.05.2005 Gazette 2005/20)**

(54) **ALL-OPTICAL SIGNAL PROCESSING METHOD AND DEVICE**

DURCHWEG OPTISCHES SIGNALVERARBEITUNGSVERFAHREN UND EINRICHTUNG

PROCEDE ET DISPOSITIF DE TRAITEMENT DE SIGNAL TOUT-OPTIQUE

(84) Designated Contracting States:
**AT BE BG CH CY CZ DE DK EE ES FI FR GB GR HU IE IT LI LU MC NL PT RO SE SI SK TR**

(43) Date of publication of application:
**26.07.2006 Bulletin 2006/30**

(73) Proprietor: **Luxdyne Oy**
**00650 Helsinki (FI)**

(72) Inventor: **VON LERBER, Tuomo**
**FIN-00650 Helsinki (FI)**

(74) Representative: **Rahkonen, Erkki Juhani et al**
**Tampereen Patenttitoimisto Oy**
**Hermiankatu 1 B**
**33720 Tampere (FI)**

(56) References cited:
**US-A- 6 028 687          US-A- 6 141 129**
**US-A1- 2001 038 481          US-B1- 6 388 753**

**Description**

**FIELD OF INVENTION**

The present invention relates to a method in optical signal processing and to an optical device for carrying out said method. More particularly, the invention relates to all-optical filters based on an optical resonator arrangement, which has a capacity to store temporally the electromagnetic energy of the incoming light and therefore has some memory about its past so that the filter can stay on a desired state for some time regardless of fast perturbations on the optical input signal. Such a filter may be referred to as a "slow" all-optical filter. The invention can be utilized, for example, for optical signal analysis, optical clock recovery, or for producing high-frequency outputs from lower frequency input signals, like e.g. optical microwave generation.

**DEFINITIONS**

The frequency of light is typically understood as the inverse of the wavelength of the electromagnetic field, i.e. $v = c/(n\lambda)$, where $v$ is the frequency, $c$ is the speed of light in vacuum, $n$ is the index of refraction of the medium and $\lambda$ is the wavelength. In the context of this application, the word frequency, however, addresses to the rate of temporal, periodic intensity change of the light (e.g. a pulse frequency), and is therefore not connected to the wavelength. To highlight this conceptual difference, this rate of intensity change is called hereafter simply the frequency $f$, and the frequency $v$ as the fundamental physical property of the electromagnetic field is discussed in terms of wavelength $\lambda$. In other words, frequency $f$ relates hereafter to temporal pulses of light, which pulses are formed from light having wavelength $\lambda$, and frequency $v$ corresponding to said wavelength.

Due to historical reasons optical resonators are called sometimes as optical cavities. These two expressions are used interchangeably throughout the document.

**BACKGROUND OF THE INVENTION**

*ELECTRICAL SIGNAL PROCESSING*

Bandpass filtering is traditionally made with electrical means and optical signals processed by conventional methods require therefore optical-to-electrical conversion before the filtering can be performed. If the signal is transmitted further by optical means, one has to convert the filtered signal back to optical domain. Conversion to and from electrical domain is non-trivial with current state-of-the-art whenever signal frequencies go above 40 GHz. The conversions forth and back generate also additional cost and possibly degrade optical signal quality. For example patent US 4,737,970 discloses a clock recovery device utilizing a cavity resonator in electrical domain. The present invention aims to all-optical conversion requiring thus no conversions to and from electrical domain and eliminating therefore any problems related to said conversions.

*ALL-OPTICAL SIGNAL PROCESSING*

All-optical signal processing traditionally deals with different wavelengths of light, where e.g. different channels in WDM (Wavelength Division Multiplexing) system are separated from each other using optical filters having different wavelength bands.

Optical processing based on temporal input signal frequencies, not wavelengths of light, has been done far less, but is also known from prior-art. Ring-resonators have been used for construction of all-pass optical filters (Azaña and Chen, IEEE Photonic Technology Letters, 14, 2002) and together with Mach-Zehnder interferometers they typically are considered as basic building blocks of all-optical filters. Cascaded ring-resonators and Mach-Zehnder interferometers can be used to perform a Fourier-transform and other optical functions. Optical resonators have been used for all-optical signal processing (Lenz et al, IEEE J. Quantum Electron., 34, Aug. 1998) and clock recovery (Jinno and Matsumoto, IEEE J. Quantum Electron., 4, Apr. 1992). The clock recovery made by Jinno was based on simple optical resonator, whose optical length was carefully matched with: 1) wavelength of the incoming light and 2) data frequency. The device is, however, very limited in its capabilities to process more than one wavelength (or WDM channel) at time.

Some other all-optical filtering techniques are presented in the following patent publications. US 5,446,573 discloses an all-optical regenerator that is based on the use of a non-linear ring resonator. US 6,028,687 discloses a laser arrangement between two resonator mirrors for recovering a clock from a modulated optical input signal. Here, bi-directional mux/demux components have been arranged within the resonator. US 6,388,753 discloses an all-optical bit phase sensor utilizing non-linear interferometers, where the refractive index of the non-linear material is varied.

## SUMMARY OF THE INVENTION

Basically and generally expressed, the present invention relies on a method, where the processing of the optical input signal includes at least the steps of : 1) excitating with at least part of said input signal an optical resonator arrangement that comprises two substantially parallel, independent, complex one-pole resonators arranged in a manner that that one of said resonators is matched with the input signal and the other one is non-matched with the input signal, and 2) based on polarization, separating further from the output of said optical resonator arrangement at least one linearly polarized optical output signal so that both said matched and non-matched resonators of said optical resonator arrangement contribute to the formation of said linearly polarized output signal.

The method may be carried out in practise, for example, by using a single optically birefringent resonator, whose output is further directed to a suitably located polarization selective device, that selects at least one direction of polarization from the output said birefringent resonator. In such an embodiment, the matched and non-matched resonators become formed inside said resonator arrangement due to the birefringency as two virtually independent resonators.

As will be shown later, the matched and non-matched resonators together with the polarization separating or selective device or means may be realized in several ways and using various types of optical elements. All the optical devices carrying out the method generate different types of bandpass filtering of the incoming optical signal and provide thus useful tools for various all-optical signal-processing applications.

The significant benefits of the invention include, for example, the fact that the present invention can be used to realize optical devices that process multiple wavelength channels simultaneously, that is to say in parallel. The invention requires that the optical length of one polarization mode of the resonator arrangement is matched with the wavelength of the incoming light, but it has no temporal signal length requirements, i.e. requirements for the duration regarding the rate of the incoming optical data. The data rate is matched by selecting, for example, suitable amount of birefringence into the resonator. The method of the invention thus enables parallel processing of multiple wavelengths simultaneously, provided that the resonator length is matched to all used wavelengths and the birefringence is suitable for the data rate.

One promising application of the invention can be found in all-optical clock recovery. However, the parallelism mentioned above holds true for all applications, provided that different wavelengths can later be separated from each other.

The most profound benefits of the invention vary according to the specific applications. When used for all-optical clock recovery the method liberates from the dependency between the resonator length (WDM channel separation) and the data rate. This freedom opens opportunity to build truly parallel systems in practise. When compared to US 5,446,573, US 6,028,687, or US 6,338,753, the present invention requires smaller number of optical elements and gives thus simplicity of construction and savings in cost. In particular, the present invention does not necessarily require the use of any optically active medium (semiconductor optical amplifier or laser source) to provide adequate signal levels and operation. In its simplest form, the present invention requires only the use of one birefringent resonator arrangement together with one polarization selective element. For example, US 5,446,573 requires a non-linear ring, which consists of two laser sources, and four phase-modulators. US 6,028,687 requires an optical mux/demux element and at least two semiconductor optical amplifiers within an optical resonator. US 6,338,753 requires non-linear interferometer, whose refractive index is varied with external optical pulses, which in practice means a sufficient high-energy laser build into a working system. More details of the present invention are set forth in the foregoing description and in the accompanying drawings describing selected embodiments of the invention. The preferred embodiments and possible variants of the invention will become more apparent to a person skilled in the art also through the appended claims.

It should be understood that in the following the purpose of the theoretical and mathematical descriptions is merely to function as tools for describing the invention better for a person skilled in the art. Therefore, even though the theory might not be completely immaculate in all respects, it nevertheless represents the Applicant's best understanding of the phenomena underlying the invention.

## BRIEF DESCRIPTION OF THE DRAWINGS

In the accompanying drawings :

Fig. 1     A basic setup of an optical signal frequency filter according to the invention.

Fig. 2     Phasor representation of the intracavity electric field.

Fig. 3     Step-pulse response of the intracavity electric field when $r = 0.99$ and phase is matched, i.e. $\varphi = 0°$. The electric field has no imaginary component.

Fig. 4     Step-pulse response of the intracavity electric field when $r = 0.99$ and phase mismatch $\varphi = 10°$. Due to the phase mismatch the field is complex. The real and imaginary parts of the electric field oscillate sinusoidally and have phase-shift $\pi/2$.

Fig. 5     Transfer functions for $\varphi = 0.1$ and $\varphi = 0$ at $r = 0.999$.

Fig. 6     Train of pulses (upper part) with period $T = 188.5$. Frequency decomposition of the signal (lower part) reveals that it has energy peak at angular frequency 0.1 rad $n^{-1}$. Dashed line represents the Fourier-transformation of rectangular signal, circles show the accurate energy density position and magnitude of the periodic signal and peaks show the computational FFT solution of the signal.

Fig. 7.     Resonator response for square pulse excitation at angular frequency $\varphi/3$. Real and imaginary parts of the electric field (upper part) show strong dependence on third harmonic component of the input excitation. The intensity of the electric field (lower part), is flattened and does not reflect filtering property of the resonator. For comparison one period of the input excitation (dashed line) is shown.

Fig. 8     Resonator has two axis of birefringence, symbolized with axis $x$ and $y$. The polarization of incoming electric field has angle $\alpha$ with respect to the axis of birefringence and the polarization beam splitter divides the out-coming electric field according to angle $\theta$.

Fig. 9     System response with a resonator, where $x$-axis is matched ($\varphi = 0$), $y$-axis is non-phase-matched ($\varphi = 0.1$), reflectivity is $r = 0.999$, angle of input polarization is $\alpha = 45°$ and angle of polarization beam splitter PBS is $\theta = 45°$ . In the upper part the intensity components $I_x$, $I_y$, and $I_b$ are depicted against a single period of excitation $E_{in}$ . On lower part the final output arms show an oscillating signal, which happens to be third harmonic of the input pulse frequency.

Fig. 10     Properties of a train of Gaussian pulses with period $T = 125.7$ to be used as input for a resonator.

Fig. 11     System response to the pulses defined in Fig. 10.

Fig. 12.     Properties of a train of Gaussian pulses with period $T = 100$ to be used as input for a resonator.

Fig. 13     System response to the pulses defined in Fig. 12.

Fig. 14     Burst of random data to be used as input for a resonator.

Fig. 15     System response to the pulses defined in Fig. 14.

Fig. 16     An embodiment of the device according to the invention using polarization controllers before and after resonator arrangement.

Fig. 17     A system with parameter values: $r = 0.99$ and $\theta = 75°$ , is subject to change of birefringence. This system is excited with a step-function. The system intensity output Bout1 from arm 1 is depicted at three different phase-shift values, namely $\varphi_0 = 0$, $\varphi_1 = 10°$ , and $\varphi_2 = 20°$ .

Fig. 18     A miniaturized embodiment of the device according to the invention.

Fig. 19     An embodiment of the device according to the invention with a first polarization beam splitter in the front of the setup following two separate resonators whose outputs are further combined with another polarization beam splitter.

Fig. 20     An embodiment of the device according to the invention based on the use of a micro sphere resonator.

Fig. 21     An embodiment of the device according to the invention based on the use of photonic bandgap structures.

**DETAILED DESCRIPTION OF THE INVENTION**

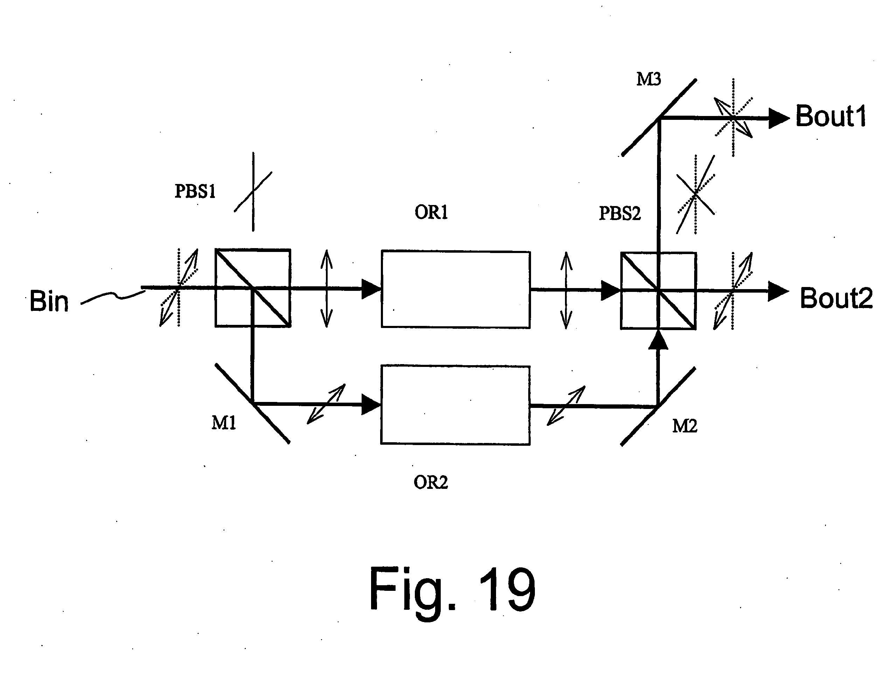

In the following the invention is mainly described referring to a birefringent resonator arrangement, where the matched and non-matched resonators are formed within a single physical cavity due to the birefringency. However, the invention is not limited to such embodiments, but the invention may also be realized using separate matched and non-matched resonators. One example of such an embodiment is later given in Fig. 19.

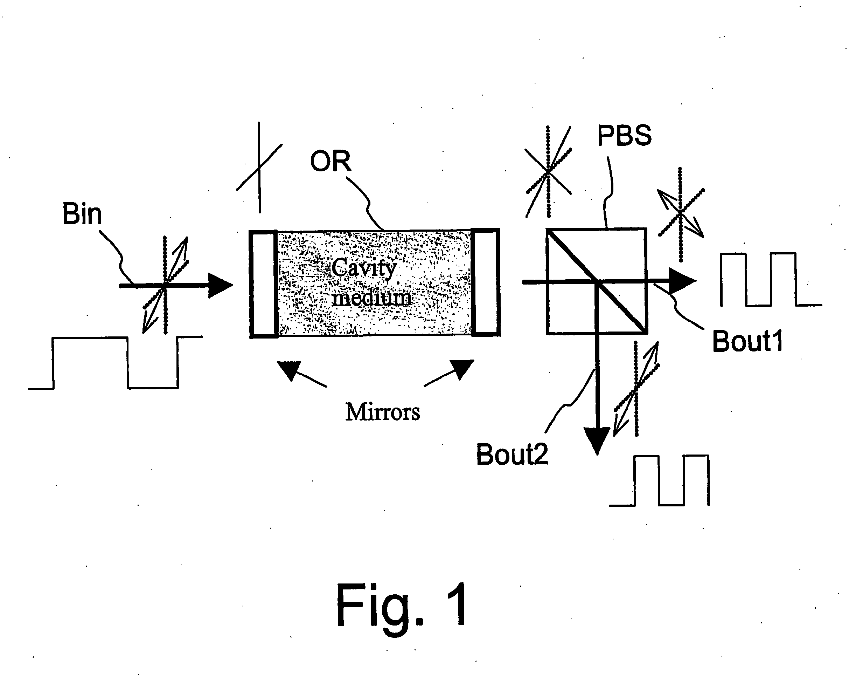

In the Figs 1,16,19 and 20 the polarization axes are depicted with "crossed" markings using both solid and dashed lines.

It is known from prior-art, as such, that an optical resonator behaves as an one-pole complex filter. Complex one-pole resonators generally, working either in optical, digital-electronic etc. domain, are able to transform purely real input signal to a complex one. Only when the wavelength of excitation is matched with the resonator, it has lowpass filtering function with no imaginary parts and therefore, it can directly be used for signal processing purposes. Alternatively, if the wavelength and rate of data both are matched, then it operates as a bandpass filter. However, when the wavelength of excitation does not match with the resonator, it always behaves as a complex bandpass filter. Although real and imaginary parts both pass only a narrow band of signal spectrum with equal gain, they differ $\pi/2$ in phase. While the optical output is always measured as the square of amplitude (i.e. intensity) and because of the quadratic phase-shift between real and imaginary parts of the signal, the output is flattened out and the resonator cannot be used directly as a bandpass filter (later this will be shown graphically).

If one could separate real and imaginary parts from each other, or suppress one of them, the resonator bandpass characteristics could effectively be utilized also in case of wavelength mismatch. The current invention provides a novel and inventive way of doing this.

The key of the invention lies in the novel way of taking into use the potential bandpass filtering capabilities of an optical complex one-pole resonator by, 1) excitating with at least part of the input signal an optical resonator arrangement that comprises two substantially parallel, independent, complex one-pole resonators arranged in a manner that one of said resonators is matched with the input signal and the other one is non-matched with the input signal, and 2) based on polarization separating further from the output of said optical resonator arrangement at least one optical output signal so that both said matched and non-matched resonators of said optical resonator arrangement contribute to the formation of said output signal.

As will be shown later, such an arrangement, that may be realized for example by using a birefringent resonator combined with a polarization beam splitter, will be able to amplify the real part of the mismatched optical field and suppress the imaginary part. Therefore, the output of such resonator-polarizer setup can be made highly dependent on the filtering properties of the complex one-pole resonator.

Figure 1 describes schematically one embodiment of the invention combining a birefringent optical resonator OR with a polarization beam splitter PBS in order to divide the light beam Bin inputted in said system into two separate optical arms Bout1, Bout2. This basic setup can be realized in a variety of different ways, as will be shown later.

In the following some basic principles of optical resonators are first discussed. Real and imaginary part transfer functions of a complex one-pole resonator are presented and an intensity output of the resonator is presented. Especially, the consequence of the birefringence of the resonator OR and the effect of the inclusion of a polarization beam splitter PBS at the resonator output are explained. Finally, selected examples of systems according to the invention, and using various optical excitation forms are presented together with some applications.

*OPTICAL RESONATOR AND PHASORS*

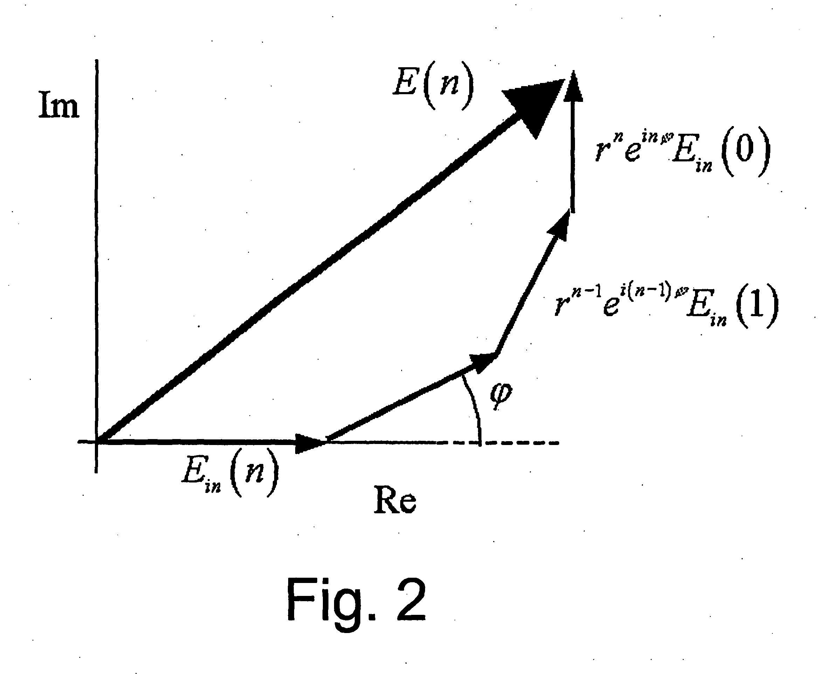

Amplitude and phase of an electric field inside an optical resonator can be presented with phasors as depicted in Fig. 2. At time $t = 0$ an electric field $E_{in}(0)$ is injected into the resonator. After one round-trip the electric field amplitude is decreased by factor $r \in [0,1]$ and has experienced a phase-shift $\varphi$ (in following the phase-shift $\varphi$ is understood to be a modulo of $2\pi$). Additionally, a new field-component is added giving a total electric field $E(1) = re^{i\varphi}E_{tn}(0)+E_{tn}(1)$. After $n$ number of round-trips the intracavity electric field becomes

$$E(n) = \sum_{p=0}^{n} \left( re^{i\varphi} \right)^{p} E_{in}(n-p) = re^{i\varphi}E(n-1)+E_{in}(n), \qquad (1)$$

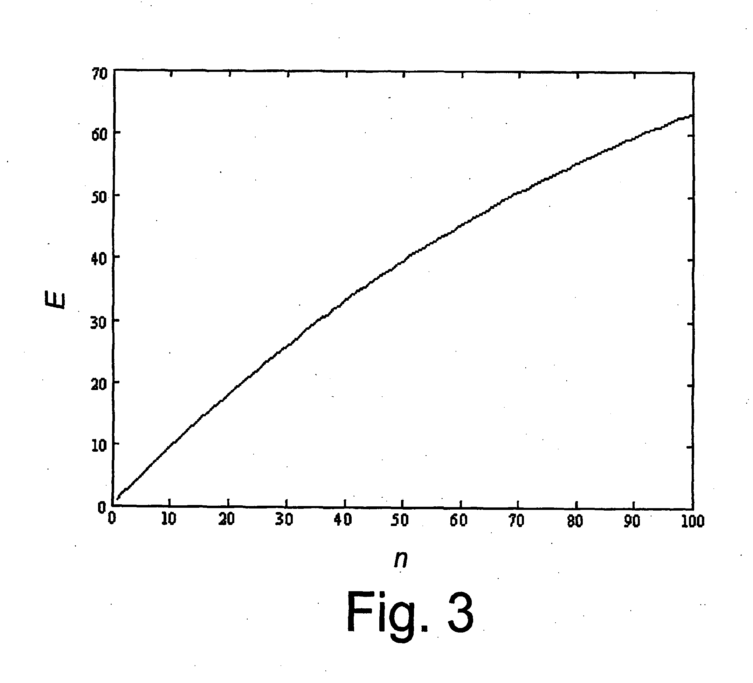

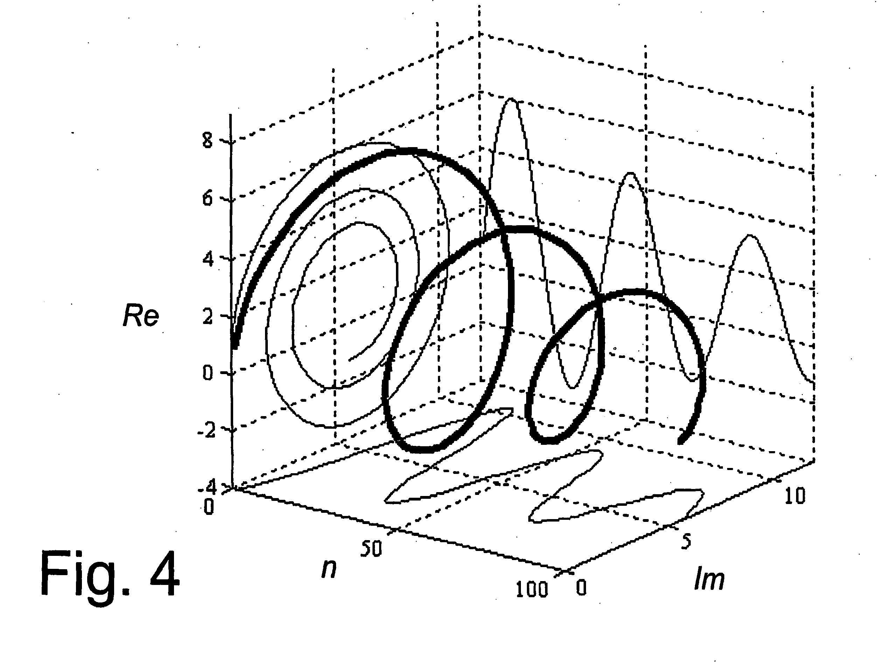

where $n = t/t_n$ is the round-trip number and $t_n$ is the duration of a single round-trip. Optical resonator, as a one-pole complex filter, will produce complex electric field inside the resonator in presence of phase mismatch $\varphi$. Buildup of energy under constant injection in an arbitrary resonator ($r = 0.99$) with phase mismatch $\varphi) = 0°$ and $\varphi =10°$ are depicted in Figs 3 and 4, respectively.

When phase is matched ($\varphi=0$), the energy starts to build up within the resonator and the net electric field has no imaginary part. Now the resonator behaves as a low-pass filter and has time constant $\tau = \ell/(-c\ln r)$ for light intensity, where $c$ is the speed of light within the medium, $\ell$ is the one-pass length of a Fabry-Perot resonator and $r$ is one-pass loss factor of light intensity within the resonator.

When phase is not matched, the electric field becomes complex and the phasor draws a converging spiral loop. As visible in Fig. 4, and as known from prior-art, the real and the imaginary part of a causal signal are connected through Hilbert-transform.

Impulse response of the resonator is

$$h(n) = \left(re^{i\varphi}\right)^n u(n) \qquad (2)$$

where $u(n)$ is the step-function (Heaviside function) due to causal nature of the response. Fourier-transform of the impulse response of real and imaginary parts give transfer functions

$$T_{Re}(\omega) = \frac{1}{2}\left[\frac{1}{i\omega - \ln\left(re^{i\varphi}\right)} + \frac{1}{i\omega - \ln\left(re^{-i\varphi}\right)}\right] \qquad (3)$$

and

$$T_{Im}(\omega) = \frac{-i}{2}\left[\frac{1}{i\omega - \ln\left(re^{i\varphi}\right)} - \frac{1}{i\omega - \ln\left(re^{-i\varphi}\right)}\right], \qquad (4)$$

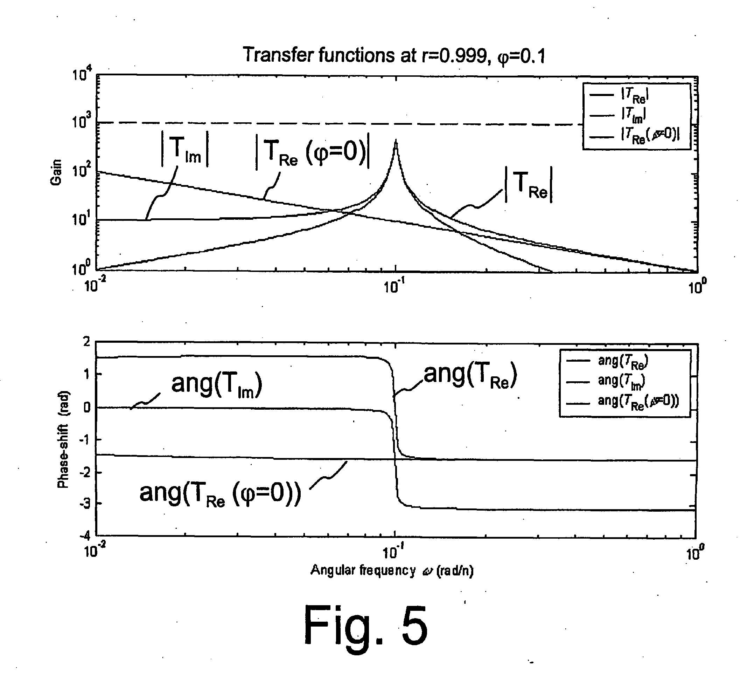

where $\omega = 2\pi f = 2\pi/n$ is an angular frequency expressed in units of rad/$n$. Transfer functions for $\varphi = 0.1$ and $\varphi = 0$ at $r = 0.999$ are illustrated in Fig. 5. Bandpass filtering property of the optical resonator at phase mismatch and lowpass property at phase match are evident. By increase of cavity finesse, i.e. $r \to 1$, the filter becomes increasingly selective.

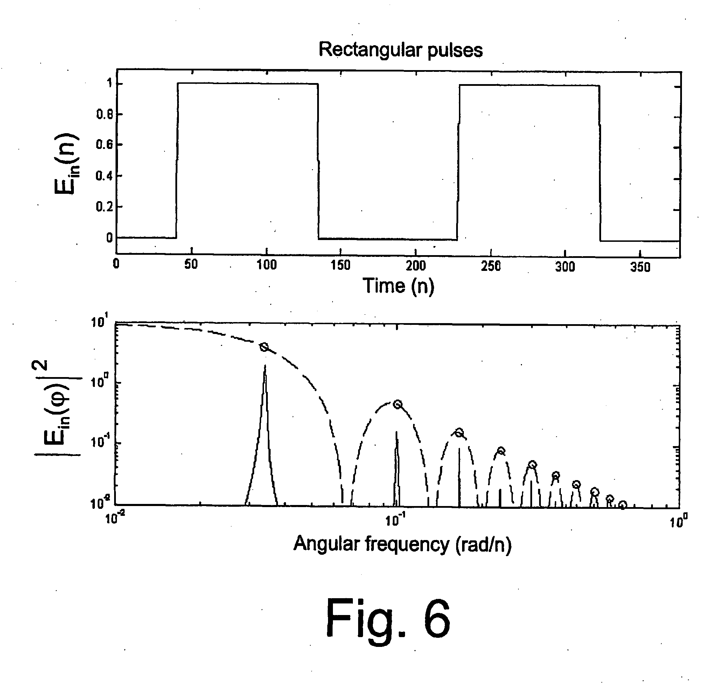

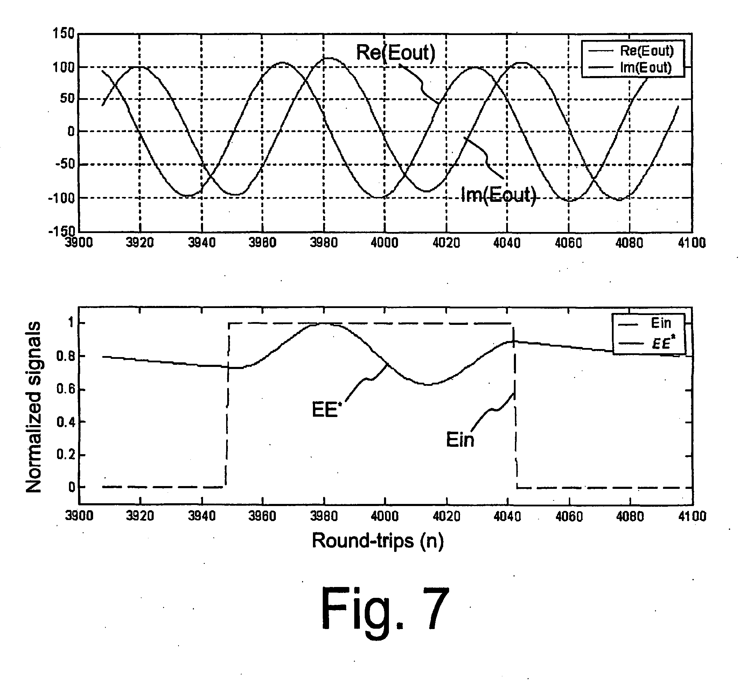

Filtering property of the resonator is now shown in time domain for a periodic input. Let us assume a train of pulses with period $T = 188.5$ as shown in Fig. 6. Frequency decomposition of the signal reveals that it has the fundamental angular frequency at 1/30 rad $n^{-1}$, its second harmonic is suppressed and it has third harmonic at 0.1 rad $n^{-1}$. When such signal is fed into a resonator with phase mismatch $\varphi = 0.1$ and $r = 0.999$ we could expect that real and imaginary parts of the signal reflect this third harmonic component while all other frequency components are highly suppressed. This becomes evident from Fig. 7 upper part. Because the amplitudes are nearly the same and phase is quadratically shifted between the real and imaginary parts of the signal, modulus of the complex signal remains approximately constant. In phasor representation the vector would draw just a circle with nearly constant radius. Intensity output $I \propto EE^*$ is thus flattened as shown in the lower part of Fig. 7. It is evident that such resonator is hardly usable as a bandpass filter at wavelength mismatch. The situation would change, however, if either real or imaginary part of the signal could be suppressed.

*OPTICAL RESONATOR BIREFRINGENCE AND POLARIZATION BEAM SPLITTER*

When an optical resonator OR is birefringent, the path lengths inside the resonator are uneven for orthogonal polarization components. When this type of resonator is combined with a polarization beam splitter PBS and circulating electric field has phase-matched and non-phase-matched components, the imaginary part of the electric field component can be suppressed. In other words, according to the present invention the system output can be made strongly dependent on the real part electric field of the mismatched resonator and such system behaves as an optical signal bandpass filter.

Let's define $x$-axis of the resonator phase-matched and $y$-axis non-phase-matched, the amount of mismatch symbolized by $\varphi$. Intracavity electric fields are

$$E_x(n) = rE_x(n-1) + E_{In,x}(n) \qquad (5)$$

and

$$E_y(n) = re^{i\varphi}E_y(n-1) + E_{b,y}(n). \tag{6}$$

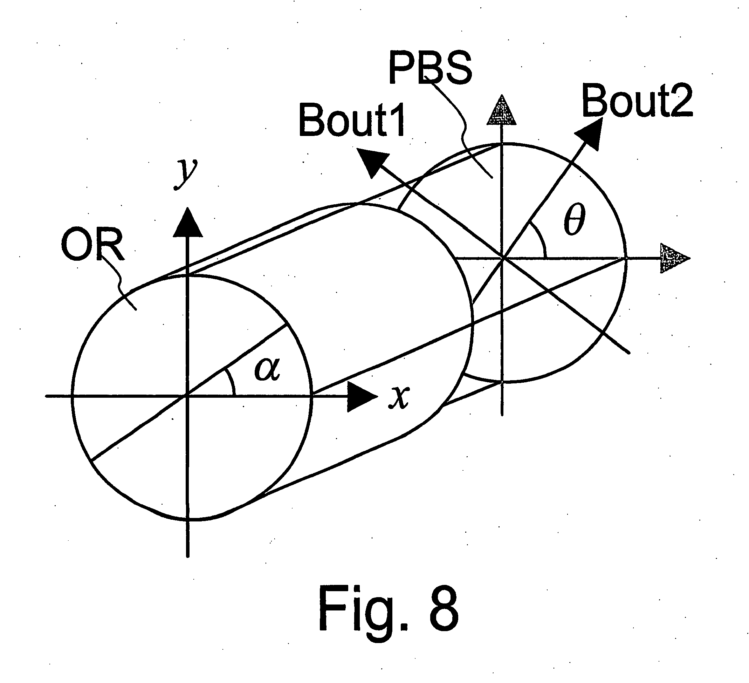

We assume that the incoming field has angle $\alpha$ with respect to the axis of birefringence of the resonator OR and the polarization beam splitter PBS divides the outcoming electric field according to angle $\theta$, as shown in Fig. 8. The polarization beam splitter PBS outputs Bout1 and Bout2 are labeled below in the equations shortly as optical arms 1 and 2. This holds true especially for a polarization beam splitter, but it should noted that the invention is not limited to the use of a polarizarion beam splitter, but any suitable polarization separating or selecting means may be employed. It can be shown that the output intensity of the polarization beam splitter PBS is

$$\begin{pmatrix} I_1 \\ I_2 \end{pmatrix} = \begin{pmatrix} \cos^2\theta & \sin^2\theta & \sin 2\theta/2 \\ \sin^2\theta & \cos^2\theta & -\sin 2\theta/2 \end{pmatrix} \begin{pmatrix} I_x \\ I_y \\ I_b \end{pmatrix}, \tag{7}$$

where $I_x = E_x E_x^*$, $I_y = E_y E_y^*$, and $I_b = E_x E_y^* + E_x^* E_y = 2E_x \operatorname{Re} E_y$. As present, the oscillating, or beating, term $I_b$ is independent on imaginary electric field Im $E_y$ when the field $E_x$ is matched with the resonator.

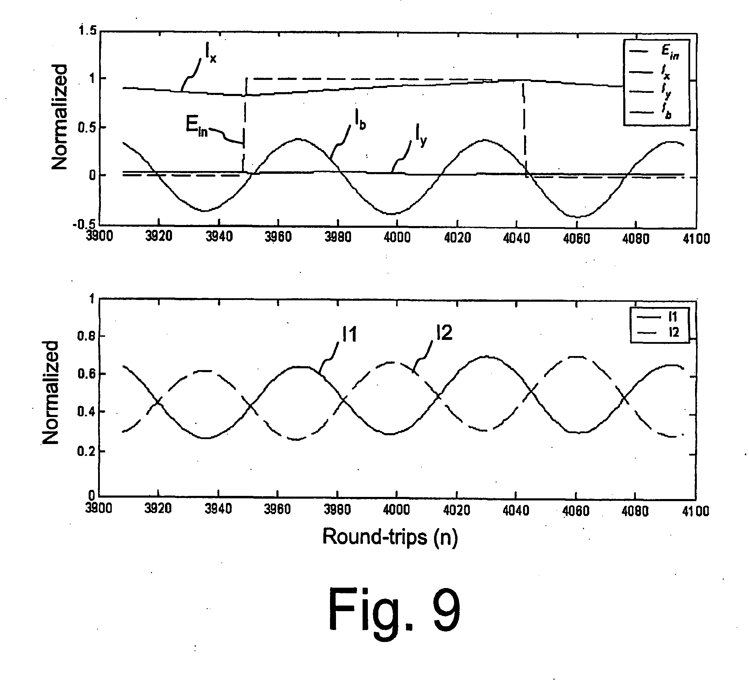

In order to show the effect, the same pulse excitation than in previous case is used with a resonator, where x-axis is matched ($\varphi = 0$), y-axis is non-phase-matched ($\varphi = 0.1$), reflectivity is $r = 0.999$, angle of input polarization is $\alpha = 45°$ and angle of polarization beam splitter PBS is $\theta = 45°$. In the upper part of Fig. 9 the intensity components $I_x$, $I_y$, and $I_b$ are depicted against a single period of excitation $E_{tn}$. The oscillating term clearly reflects the absence of imaginary component and the real component of the electric field is amplified by $E_x$. On lower part of the Fig. 9, the final output arms show an oscillating signal, which happens to be third harmonic of the input pulse frequency.

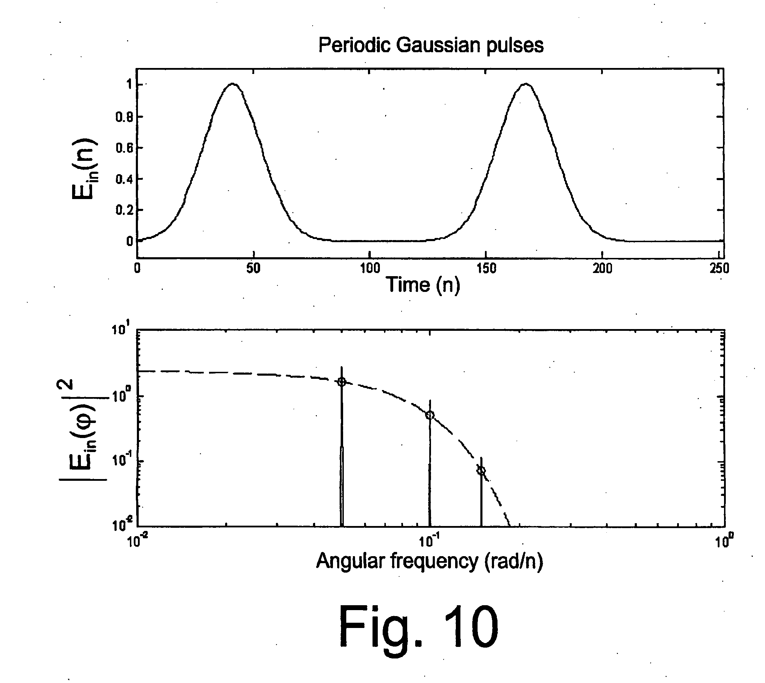

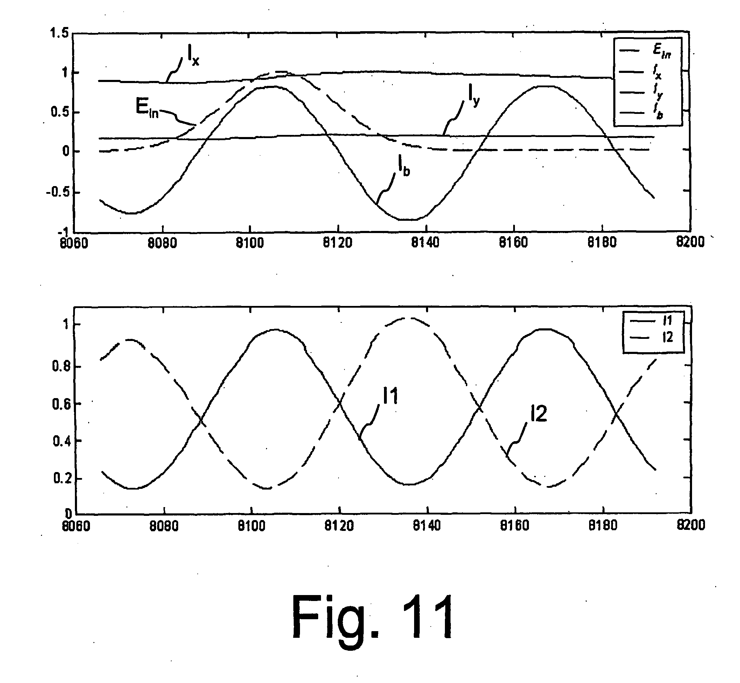

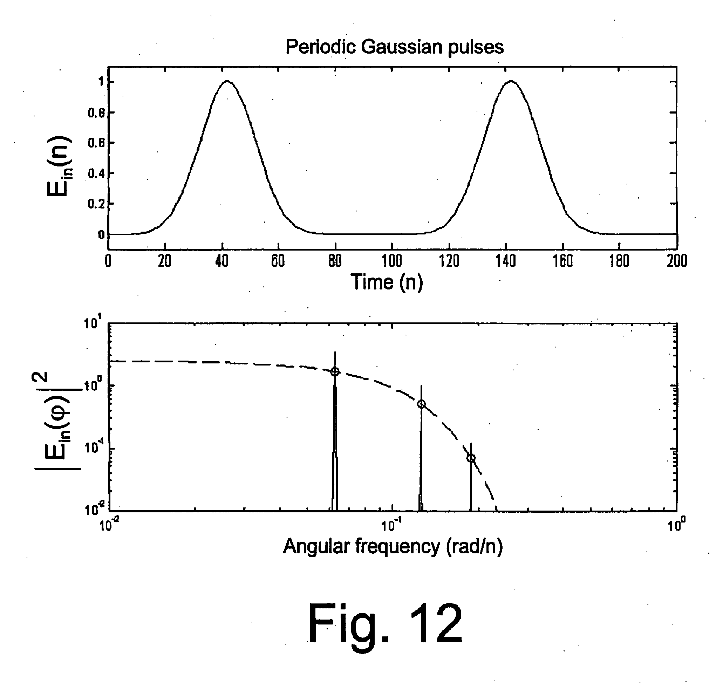

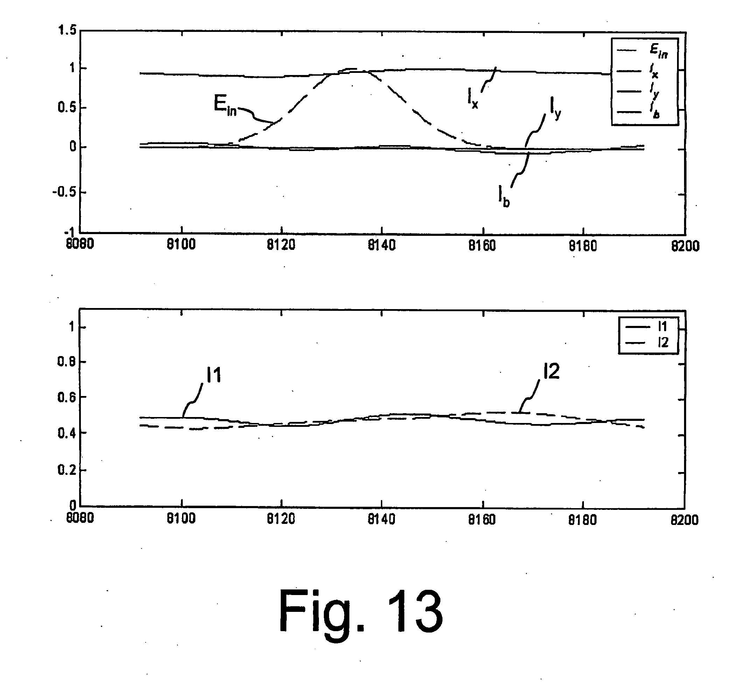

The operation can be proved also for other type of signals. A train of Gaussian pulses with period $T = 125.7$, as depicted in Fig. 10, is fed into the same resonator than used previously. The second harmonic of the frequency decomposition is exactly at resonance frequency of the resonator and, therefore, we can expect this second harmonic component to be passed by the filter. This is exactly what happens as depicted by Fig. 11. If the same train of pulses period slightly changed ($T = 100$) and thus no frequency components at resonance frequency, is fed into the previously introduced resonator, the filter output is essentially flat. For this effect, see Figs 12 and 13, where said effect becomes obvious for any person skilled in the art.

*APPLICATIONS, ALL-OPTICAL MULTIWAVELENGTH CLOCK RECOVERY*

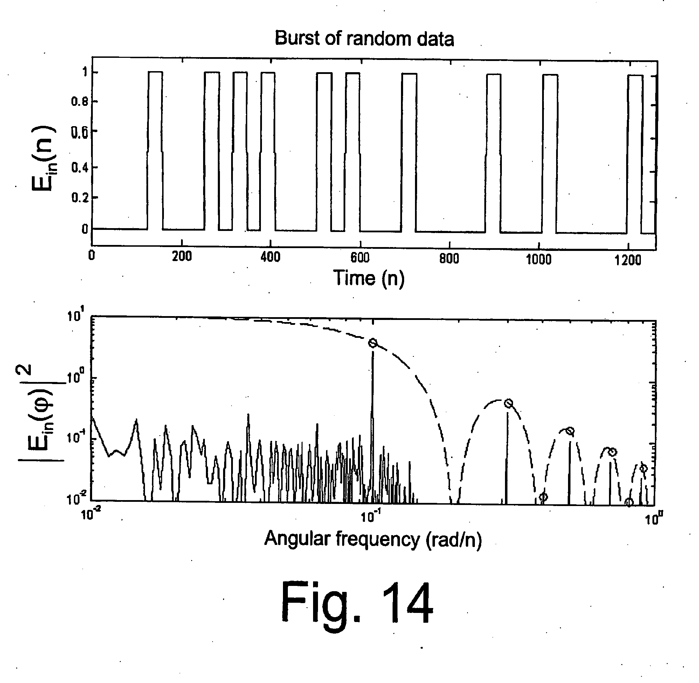

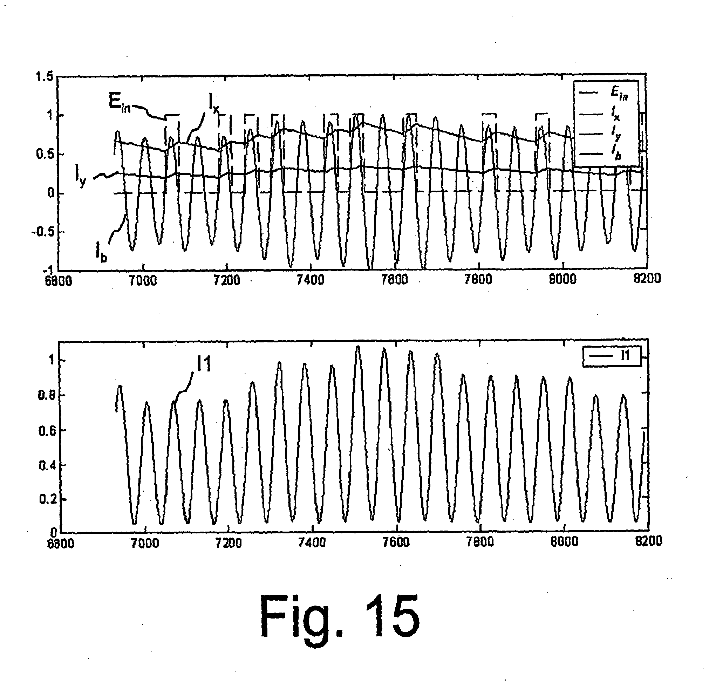

One interesting application of the invention can be found in all-optical clock recovery. When compared to prior art solutions to make all-optical clock recovery by use of Fabry-Perot resonator, the arrangement of the invention is superior by its ability to operate simultaneously at multiple wavelengths. A burst of data (half of bits randomly shut off) with clock period $T = 62.8$ is fed into the resonator OR as shown in Fig. 14. The output of the resonator OR is depicted in Fig. 15. For sake of clarity only arm 1 (Bout1) is plotted. This case illustrates very well the properties of the invented system. It selectively filters the angular frequency, which is in match with the resonance frequency of the unmatched polarization component, and in addition to this, it maintains the operation for some time depending on resonator finesse. Optical resonator can be thought as an temporal energy store. Now it stores and maintains the oscillation it has picked up for a certain time.

In the following an example calculation of making filtering at several wavelengths simultaneously is given.

We shall assume a set DWDM channels ($\Delta v = 100$ GHz) operating at $\lambda = 1550$ nm wavelength region. Data rate at each channel is $f = 40$ GHz. A resonator medium has refractive index $n = 1.5$. In following we will determine the required Fabry-Perot resonator length $\ell$, degree of birefringence $\Delta n$, and one-pass intensity loss factor $r$ for simultaneous operation of the system at multiple wavelengths.

Resonator x-modes are set to coincide with channel separation of the DWDM system, i.e., $\Delta v = c/(2n\ell)$, which gives the resonator length $\ell = 1$ mm. The DWDM channels would also be matched with resonator modes when the length is integer multiple of $\ell$, as clear for the persion skilled in the art

The filtered frequency is dependent on the difference of x- and y-mode refractive indices

$$f = \frac{c\Delta n}{\lambda n} \ , \qquad\qquad (8)$$

which determines the required degree of birefringence to be $\Delta n = 3.1 \cdot 10^{-4}$ at $\lambda = 1550.00$ nm.

As present from Eq. 8 the filtered frequency is dependent on the wavelength of light. While different channels have slightly different wavelength, the filtered frequency is also changed. The difference in filtered signal frequency can be expressed in function of the wavelength change

$$df = -\frac{c\Delta n}{\lambda^2 n} d\lambda \ . \qquad\qquad (9)$$

The channel separation can be expressed in terms of wavelength $d\lambda = -\lambda^2 d\nu/c = -0.8$ nm, which translates to shift of filtering frequency according to following Table 1.

Passband of a Fabry-Perot resonator is defined as

$$\delta\nu = |\ln r| \frac{c}{2\pi n \ell} \ . \qquad\qquad (10)$$

The filter operates for those DWDM channels where the filtering frequency $f$ shifts stays within the passband of the resonator. This happens when $df < 0.5\, \delta\nu$.

Table 1.

| Channel # | $d\lambda$ (nm) | $df$ (GHz) |
|---|---|---|
| 0 | 0 | 0 |
| 1 | -0.8 | 0.02 |
| 2 | -1.6 | 0.04 |
| 10 | -8.0 | 0.21 |
| 20 | -16 | 0.41 |
| 50 | -40 | 1.03 |

The passbands and the number of possible simultaneously processed channels for various loss factors $r$ are presented below in Table 2.

Table 2.

| $r$ | $0.5\, \delta\nu$ (GHz) | Channel shift max. # | $d\lambda$ (nm) | $df$ (GHz) |
|---|---|---|---|---|
| 0.9 | 1.68 | 81 | 64.87 | 1.67 |
| 0.99 | 0.16 | 7 | 5.61 | 0.14 |
| 0.998 | 0.03 | 1 | 0.8 | 0.02 |

As can be seen, the resonator is capable of processing smaller number of channels the lower the loss factor (higher the mirror reflectivity) is. High loss factor (low mirror reflectivity) gives larger number of channels to be processed, but with lower capability for recovery (the energy storage of the resonator is lossy). One has to make a tradeoff between the number of processed channels and the capability to recover the clock signal.

The situation can be compensated by suitable control of the wavelength dependence of the birefringence $\Delta n(\lambda)$.

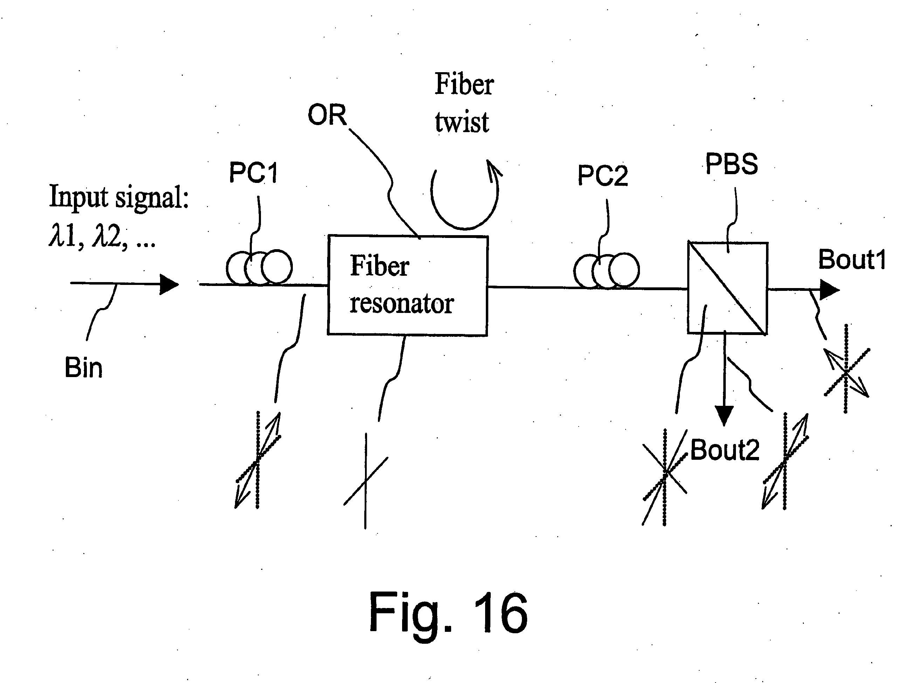

One possible setup contains, as depicted schematically in Fig. 16, a first polarization controller PC1, a Fabry-Perot type fiber optical resonator OR with ability for a fiber twist, second polarization controller PC2, and a polarization beam splitter PBS.

The first polarization controller PC1 sets the state-of-polarization of incoming light such that the angle of polarization (azimuth) differs from the axis of birefringence of the resonator OR. Should they completely coincide, no oscillation may be observed at the output while all energy is directed either on matched or non-matched resonator mode.

In this embodiment, the fiber optical resonator OR is constructed by coating cleaved or polished fiber end with high reflectivity dielectric coating. The fiber length is chosen such that free spectral range (FSR) is matched with the channel spacing of the incoming light. The optical length of the resonator is regulated in order to keep the x-mode optical length matched with channels of the incoming light. In the context of this invention the aforementioned matching is shortly referred to as mode-locking and in addition to a fiber resonator it applies also to other type of resonators. Instead, or in addition to adjusting the length of the resonator, mode-locking may also be achieved by tuning the wavelength of the incoming light. The resonator has preferably low internal loss and has high reflectivity dielectric mirrors. The degree of birefringence, and thus the angular frequency of the mismatch, is adjusted by twisting the optical fiber constituting the resonator. The amount of angular frequency mismatch should be equal with the angular frequency of the incoming data.

Second polarization controller PC2 sets the state-of polarization of the resonator OR output such that the polarization beam splitter PBS divides signals suitably between the two output arms Bout1, Bout2.

If the processed signal has multiple wavelengths (channels), each channel should have data frequency matched with the degree of angular mismatch from channel to channel.

The phase may differ. Later one may want to separate channels from each other, but this speculation and related techniques are beyond the scope of the present invention.

In the following certain variations and alternatives for the different parts of the setup carrying out the invention have been listed. These apply to the clock recovery application already explained, but are also applicable, mutatis mutandis, to other applications and optical setups described in this text. Further, one should not consider the invention to be limited even by these variations and alternatives, but the invention should be restricted only in the manner indicated by the scope of the claims appended hereto.

The resonator OR does not need to be of a Fabry-Perot type, but it could also be, for example, a fiber loop resonator (preferably with weak input and output couplings). It may also be a micro-ring, -sphere, -toroid or a photonic bandgap resonator. In such "non-Fabry-Perot" loop or ring type resonators the optical medium is arranged to form at least partly closed optical circle where the light travels substantially only one common direction without multiple back-and-forward reflections.

The cavity medium of the resonator OR may constitute of a normal single mode fiber or polarization maintaining fiber. However, the setup may also be build completely without any fiber optic components. The required optical functions can be achieved with free-space optics or integrated optics. Therefore, the resonator OR could be, for example, a coated dielectric rod, a pair of free-space dielectric mirrors or even a semiconductor device. The cavity medium may be simply air or other transparent gas or liquid instead other optically transparent, dielectric or semiconductor materials. It should be noted, that the invention is not limited only to visible wavelengths, but it can be used broadly with any optical wavelengths that may be shorter or longer than visible wavelengths. It is also obvious for a person skilled in the art that certain coherence of the inputted light is required.

The "mirrors" of the resonator OR may be, for example, dielectric stack mirrors, metallic mirrors, fiber loop minors, fiber couplers (not really a mirror, but input port with weak efficiency) or different type of waveguide couplers. Further, said mirrors may have different reflectivities for x- and y-directions. High reflectivity mirrors are typically desired.

Light is necessarily not coupled into the resonator OR through the aforementioned mirrors, but evanescent coupling, or any other optical coupling methods known in the art may also be used. Input coupling may be realized, for example, with prisms arranged in planar waveguides.

The degree of birefringence in the resonator OR can be adjusted with not only twist, but also by stress, tension, bend, or other structural deformations of the cavity medium. Temperature and electro-optical effects may also be used to affect the birefringence of the resonator depending on the cavity medium/material. For example, if the cavity medium is gas or vacuum, then the birefringency of the resonator may be altered by deformation of the end mirrors or corresponding cavity forming reflectors.

As already mentioned, the resonator arrangement does not need to based on a birefringent cavity, but instead it may also be formed from two physically separate resonators one matched with the incoming light and the other one non-matched with the incoming light. The polarization state of the incoming light is required to be such that both of these resonators participate in the formation of the final output signal available after the polarization separating means.

Polarization controllers PC1,PC2 before and after a resonator OR, as shown schematically in Fig. 16, may not be necessary at all if the polarization of the incoming light is already suitable for the resonator OR, and the selection angle of the polarization beam splitter PBS is correct or it can be adjusted.

Polarization separating means may be a beam splitter PBS or any optical component or set of components known in the art, which selects or separates at least one polarization component from the inputted light. It is not even necessary to divide the polarization components of the light into different optical arms, but one of these components may be absorbed or otherwise dumped during the separation process. Possible devices include, but are not limited to the following : Wollaston prism, Glan-Foucault polarizer, Nicol prism, Rochon prism, dielectric coating polarizer, wire grid polarizer, polymer based film polarizer, single polarization mode transmitting fiber, photonic crystal polarization separator. The polarization separation means do not need to be comprised in a separate optical component, but it/they can be, for example, integrated directly on the output side of the resonator arrangement.

In case when the birefringence of the resonator OR is wavelength dependent, then the extracted frequency may vary from inputted channel to channel, i.e. data rate is xx GHz for inputted channel one, yy GHz for channel two etc.

The mode locking may be active or passive. For example, if the light source is in vicinity of the resonator OR, the out-leaking light from resonator OR may be used to feed some light back to the coherent light source (typically laser). For the correct operation of the setup, however, the resonator OR is typically required to be substantially mode-locked with the incoming light / light source.

The excitation of the system according to the invention may be due to change of the incoming light intensity, change of its polarization, change of the resonator length (so that x-axis also becomes non-phase-matched), or change of the resonator medium refraction index. The excitation may be generated by the light source, an external modulator (modulating light intensity or polarization), or coupling strength of the input port of the resonator. Also the input port coupling strength may be modulated. Excitation forms may be periodic: train of square pulses, Gaussian pulses, solitons (sech), or non-periodic: stream of data . Other type of input signals may also be used. Therefore, the excitation may be due to the properties of the incoming light itself, or the excitation may also be accomplished by altering the properties of the resonator arrangement.

*APPLICATIONS, SIGNAL FREQUENCY COMPONENT ANALYSIS*

The setup described schematically in Fig. 16 can be used for input signal RF-component analysis when equipped with at least one optical sensor (photodiode) and means to read the sensor output. Preferably, photodiodes or other type of fast optical sensors are arranged to sense the output of at least one optical signal Bout1 and/or Bout2. The degree of birefringence of the resonator OR is swept (by e.g. twist) such that the optical frequency phase mismatch goes step-by-step from 0 to $\pi$. While each optical frequency mismatch corresponds to a certain radio frequency of the signal, the output signal Boutl,Bout2 amplitudes are read during the sweep. One can thus obtain information about signal frequencies of the incoming signal Bin. In this configuration one utilizes the one-pole complex resonator frequency selectivity for inspection of optical signal quality.

*APPLICATIONS, HIGHER HARMONIC SIGNAL GENERATION*

The setup of the previous cases explained abobe (Fig. 16) can be used for optical microwave generation when further equipped with suitable optical light source. As explained and illustrated in already earlier in this application, the higher harmonics of, e.g. train of square pulses, can be extracted if the input signal contains higher harmonic components, like some odd harmonic of a train of square pulses.

*APPLICATIONS, MEASUREMENT OF BIREFRINGENCE*

The filtering property of a resonator system according to the invention is dependent on the degree of birefringence in the optical resonator OR . This property can be used for the measurement of minute birefringence in the following way.

When the system is excited with an optical signal Bin, which includes multiple ranges of frequencies, or continuum of frequencies, the change of filtering frequency can be determined from frequency output oscillations. An example of a signal with continuum of frequencies is a step-function, and a signal with multiple frequencies is, for example, a periodic sinc signal.

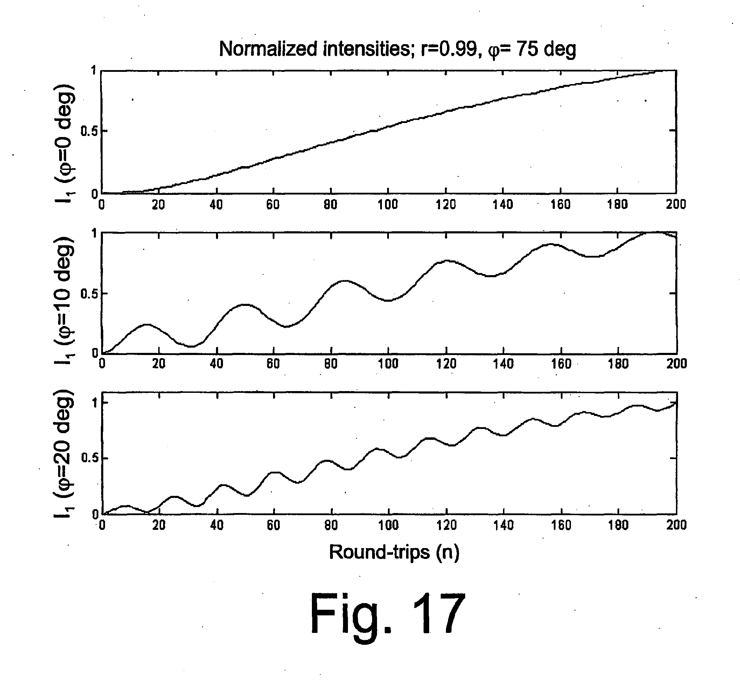

A system with parameter values: $r$ = 0.99 and $\theta$ = 75° , is subject to the change of birefringence. This system is excited with an inputted step-function. The system intensity output Bout1 from arm 1 is depicted in Fig. 17 at three different phase-shift values, namely $\varphi_0$ = 0 , $\varphi_1$ =10° , and $\varphi_2$ = 20° . As present, the oscillating frequencies are dependent on the changes of the birefringence. The oscillation will dampen out while the excitation continues unchanged.

If we know the initial state of the studied optical system, i.e., its birefringence, the change of oscillation frequency is an indication of the change of birefringence. While the oscillation will dampen out on course of time, the excitation should be repeated at some time interval.

An alternative way to measure birefringence is to excite the system with a periodic signal, whose fundamental frequency, or some of its harmonics, coinside with the filtering frequency of the resonator system. The excitation frequency is actively tracking the filter transmission maximum by, e.g., using a voltage controlled oscillator. If the filter output amplitude decreases, the excitation frequency is adjusted such that the output amplitude reaches again its maximum. Thus, the frequency of excitation is an indication of the birefringence of the optical system.

*APPLICATIONS, MINIATURIZED EMBODIMENT*

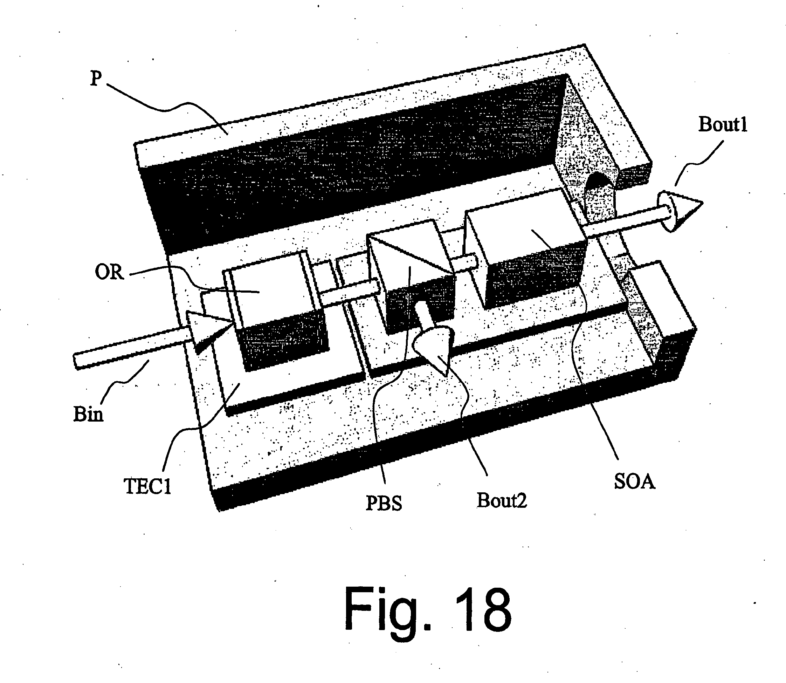

The invention may also be realized as a miniaturized optical arrangement described schematically in Fig. 18. Optical resonator OR may be realized as a miniaturized (just a few mm in dimensions) Fabry-Perot etalon whose both optical ends have been coated with a dielectric reflective coatings. Polarization selective element PBS is a miniature size polarization beam splitter or polymer film polarizer. According to one embodiment, the PBS could be cemented or integrated directly right after the optical resonator OR. In Fig. 18 only one optical arm of the PBS is utilized, and the useful light is amplified with semiconductor optical amplifier SOA and then directed to output. The input and output could naturally comprise additional optical elements, like lenses for focusing or waveguides for light transmission. The optical resonator OR temperature is regulated with one or more thermoelectric coolers TEC1, which stabilize the optical resonator OR temperature to a desired value. This is needed to keep the resonator transmission modes stable and the optical resonator OR mode-locked with the wavelengths of the incoming light. The device package P may include still further thermoelectric coolers or temperature regulators, although they have not been depicted in Fig 18. The birefringence of the optical resonator OR can in fact be controlled with, e.g., two or more thermoelectric coolers. When two or more temperature regulators are connected to the optical resonator OR, they can be used to create a temperature gradient, which induces birefringence on the optical resonator OR. By controlling the temperature difference and the average temperature, one may simultaneously adjust the optical resonator OR birefringence and the mode-locking property. Alternatively, a pair of electrodes, whose electric field induce and control the amount of birefringence, can also be used for birefringence control.

*OTHER APPLICATIONS AND FURTHER VARIATIONS*

The invention can be used for wide variety of applications related to all-optical filtering. Because of the auto-regression nature, i.e. "memory" of the filter, filtering does not however apply for very fast changes. For certain applications, this may be a desired feature instead of a limitation.

Again, it needs to be emphasized, that while the invention has been shown and described here with respect to a few selected embodiments, it should be understood that these embodiments are only examples, and that a person skilled in the art could construct other embodiments utilizing technical details other than those specifically disclosed herein. It should therefore be understood that various omissions and substitutions and changes in the optical design of the resonator arrangement, polarization selective element and related optical components coupling light in and out from said components, as well as in the mutual organisation and operation of the same, may be made by those skilled in the art.

For example, according to the invention it is also possible to arrange a first polarization beam splitter PBS1 in the beginning of the setup, then two resonators OR1 and OR2 (one matched and other non-matched), whose outputs arc further combined with another polarization beam splitter PBS2. This embodiment is schematically shown in Fig. 19. The polarization axes of beam splitters PBS1 and PBS2 arc depicted with solid line. The polarization axes of PBS1, which determines the principle polarization axis of the whole system, are illustrated with dashed lines in other parts of the system. Components M1-M3 are mirrors. Here, instead of a single birefringent resonator arrangement the resonator arrangement comprises two physically separate individual resonators OR1 and OR2.

The setup according to the invention has been shown in the above examples to operate in transmission. However, it should be obvious for a person skilled in the art that embodiments also operating in reflection are possible. The resonator arrangement OR may thus be realized in such a way that the light inputted in the resonator through a port (typically a mirror) outputs from the same port. In the above given examples the resonator has been arranged with separate ports for input and output.

As a general way of optimizing the performance of the optical setup according to the invention, the angle of the linear polarization of the incoming light may be adjusted respect to the polarization axes of the resonator arrangement so that the oscillations at the output are maximized. Similarly, the angle of the polarization separating element after the resonator arrangement may be adjusted for the same purpose.

A light amplifying optical element or light amplifying means may be arranged in front of the resonator arrangement, after it or within it. Preferably, such an element is arranged between the resonator and the polarization separating means. Suitable light amplifying elements include, for example, active optical fibers and other active waveguides, which are typically based on the use of rare-earth element doped materials. Another possibility is the use of various semiconductor optical amplifier (SOA) devices as shown in Fig. 18.

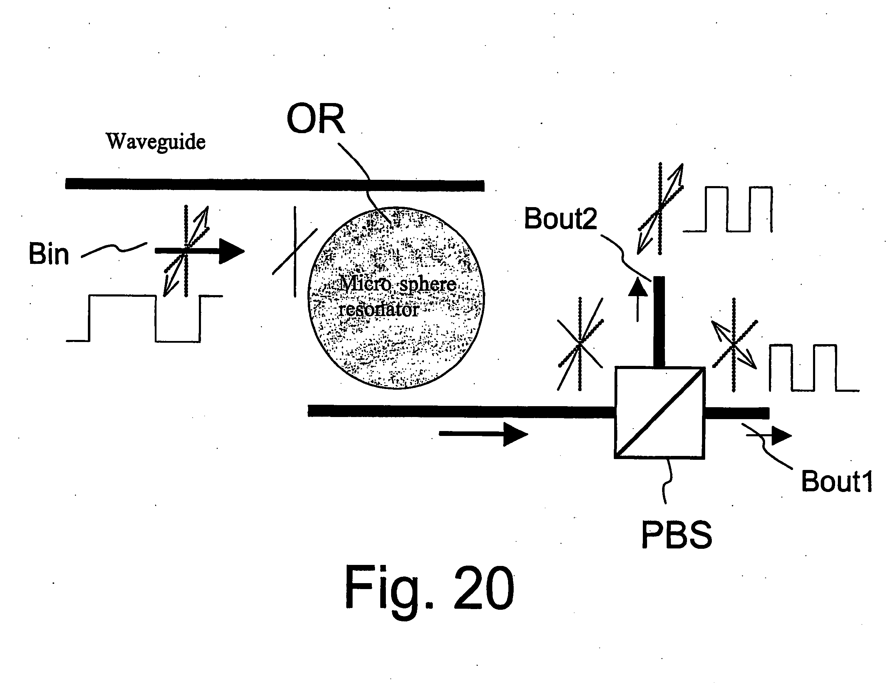

Figure 20 describes schematically still one possible embodiment of the device according to the invention based on the use of a micro sphere resonator. A waveguide is arranged to couple the incoming light Bin into the resonator OR, and another waveguide couples the light out from the resonator to a polarizing beam splitter PBS.

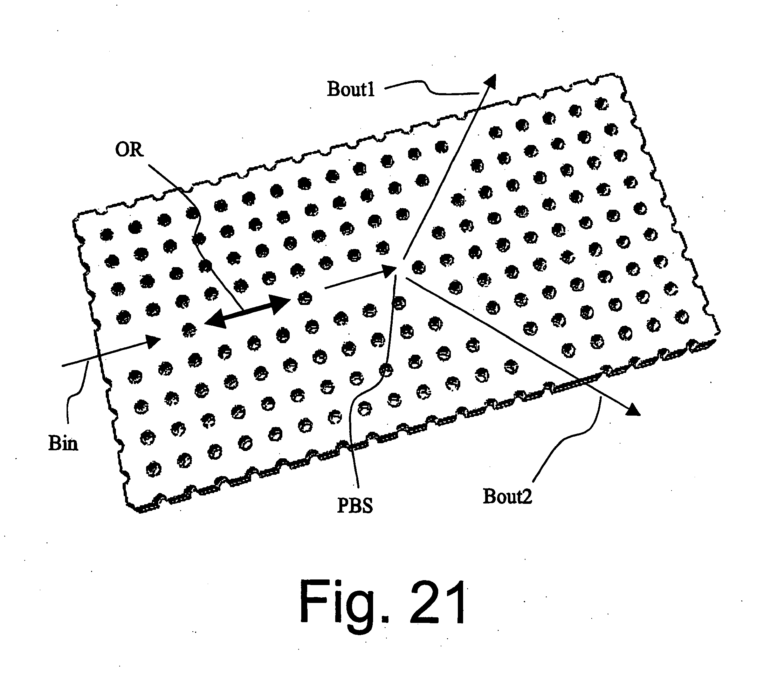

Fig. 21 depicts how the device according to the invention may be manufactured using photonic bandgap structures. Expressed in more general terms, the device may be manufactured by use of light scattering periodic microstructures. Such a device can be built in the size of minimum of few tens of micrometers. A solid-state substrate medium (like glass, silicon, or suitable polymer) can serve as the base for periodic microstructures. The incoming light Bin can be guided along the missing row of microstructures. Optical resonator OR can be formed using two or more microstructures, or it may be formed in the shape of a ring, and the outcoupled light can be guided to a photonic crystal polarization beam splitter PBS. Fig. 21 is purely illustrative and microstructure form, size, pitch, aspect ratio, etc. are dependent on used wavelength and optical design.

**Claims**

1. A method for optical signal processing of an optical input signal (Bin), said method comprising excitating a first complex one-pole resonator (OR1) matched with a wavelength of the input signal (Bin), **characterized in that** said method further comprises

   - excitating with at least a part of said input signal (Bin) an optical resonator arrangement that comprises said first complex one-pole resonator (OR1) and a second independent complex one-pole resonator (OR2), wherein said second resonator (OR2) is non-matched with said wavelength, and
   - based on polarization, separating from the output of said optical resonator arrangement at least one linearly polarized optical output signal (Bout1) so that both said first and second resonators (OR1, OR2) of said optical resonator arrangement contribute to the formation of said linearly polarized output signal (Bout1).

2. A method according to claim 1, wherein the imaginary part of a non-matched electric field ($E_y$) corresponding to said second resonator (OR2) is supressed.

3. A method according to claim 1, wherein the optical input signal (Bin) is substantially coherent and mode-locked with the optical resonator arrangement.

4. A method according to claim 1, wherein said resonator arrangement is substantially a a single resonator cavity where said independent first and second resonators (OR1, OR2) are formed as intracavity resonators within said single cavity based on the birefringency of said single cavity.

5. A method according to claim 1, wherein said method is applied to generate a higher frequency optical output signal (Bout) from a lower frequency optical input signal (Bin).

6. A method according to claim 1, wherein said method is applied to all-optical clock recovery.

7. A method according to claim 1, wherein said method is applied to analyse the signal frequency components of an optical input signal.

8. A method according to claim 5, wherein said method is applied to generate output signal in microwave or higher frequency range.

9. A method according to claim 4, wherein said method is applied to the measurement of birefringency of said optical resonator arrangement.

10. An optical device for optical signal processing of an optical input signal (Bin), wherein said device comprises a first complex one-pole resonator (OR1) matched with a wavelength of the input signal (Bin), **characterized in that** said device further comprises an optical resonator arrangement arranged to be excited with at least a part of said input signal, and which arrangement in turn comprises said first complex one-pole resonator (OR1) and also a second independent optical resonator (OR2), wherein said second optical resonator (OR2) is non-matched with said wavelength, said device further comprising polarization separating means (PBS) adapted to separate from the output of said optical resonator arrangement at least one linearly polarized optical output signal (Bout1) so that both optical resonators (OR1, OR2) contribute to the formation of said linearly polarized output signal (Bout1).

11. An optical device according to claim 10, wherein the imaginary part of a non-matched electric field ($E_y$) corresponding to said second resonator (OR2) is arranged to be supressed.

**12.** An optical device according to claim 10, wherein said resonator arrangement is substantially a single resonator cavity where said independent first and second resonators (OR1, OR2) are formed as intracavity resonators within said single cavity based on the birefringency of the said single cavity.

**13.** An optical device according to claim 10, wherein said optical resonator arrangement comprises one or more Fabry-Perot type resonators in which the optical medium of such a single resonator is arranged between cavity-forming reflecting means.

**14.** An optical device according to claim 10, wherein said optical resonator arrangement comprises one or more loop or ring type resonators (OR) in which the optical medium of such a single resonator (OR) is arranged to form at least partly closed optical circle.

**15.** An optical device according to claim 13 or 14, wherein said optical medium partly or completely consists of one of the following materials or of their combination: solid material, liquid material, gaseous material or vacuum.

**16.** An optical device according to claim 15, wherein said solid material is dielectric material or semiconductor material.

**17.** An optical device according to claim 13 or 14, wherein said optical resonator arrangement comprises at least one fiber or waveguide resonator.

**18.** An optical device according to claim 10, wherein said polarization separating means (PBS) is/are based on the use of one or more of the following optical items: Wollaston prism, Glan-Foucault polarizer, Nicol prism, Rochon prism, dielectric coating polarizer, wire grid polarizer, polymer based film polarizer, single polarization mode transmitting fiber or photonic crystal polarization separator.

**19.** An optical device according to claim 18, wherein said polarization separating means (PBS) is a polarization beam splitter or a polarization beam selector.

**20.** An optical device according to claim 10, wherein said device further comprises means for altering the polarization state of the light in one or more of the following positions: before entering the resonator arrangement, within the resonator arrangement, after the resonator arrangement but before the polarization separating means (PBS), within the polarization separating means (PBS) or after the polarization separating means (PBS).

**21.** An optical device according to claim 10, wherein said device further comprises active light amplifying means.

**22.** An optical device according to claim 21, wherein said active light amplifying means comprise a semiconductor optical amplifier (SOA).

**23.** An optical device according to claim 21, wherein said active light amplifying means comprise a rare-earth doped waveguide.

**24.** An optical device according to claim 10, wherein said device is partly or completely manufactured from miniaturized optical components.

**25.** An optical device according to claim 10, wherein said device is partly or completely manufactured by use of light-scattering periodic microstructures.

**Patentansprüche**

**1.** Verfahren zur optischen Signalverarbeitung eines optischen Eingangssignals (Bin), wobei das Verfahren Folgendes umfasst: Anregung eines ersten komplexen einpoligen Resonators (OR1), der auf eine Wellenlänge des Eingangssignals (Bin) abgestimmt ist,
**dadurch gekennzeichnet,**
**dass** das Verfahren ferner Folgendes umfasst:

- Anregung einer optischen Resonatoranordnung, die den ersten komplexen einpoligen Resonator (OR1) und einen zweiten unabhängigen komplexen einpoligen Resonator (OR2) umfasst, mit zumindest einem Teil des Eingangssignals (Bin), wobei der zweite Resonator (OR2) nicht auf die Wellenlänge abgestimmt ist; und
- basierend auf Polarisation, Trennung von zumindest einem linear polarisierten optischen Ausgangsignal (Bout1) von dem Ausgang der optischen Resonatoranordnung, so dass sowohl der erste als auch der zweite Resonator (OR1, OR2) der optischen Resonatoranordnung an der Bildung des linear polarisierten Ausgangssignals (Bout1) beteiligt sind.

**2.** Verfahren nach Anspruch 1,
wobei der imaginäre Teil eines nicht abgestimmten elektrischen Feldes ($E_y$), das dem zweiten Resonator (OR2) entspricht, unterdrückt ist.

**3.** Verfahren nach Anspruch 1,
wobei das optische Ausgangssignal (Bin) mit der optischen Resonatoranordnung im Wesentlichen kohärent und modengekoppelt ist.

**4.** Verfahren nach Anspruch 1,
wobei es sich bei der Resonatoranordnung im Wesentlichen um eine einzelne Resonatorkavität handelt, wobei der erste und zweite unabhängige Resonator (OR1, OR2) basierend auf der Doppelbrechung der einzelnen Kavität als Intrakavitäten-Resonatoren innerhalb der einzelnen Kavität ausgebildet sind.

**5.** Verfahren nach Anspruch 1,
wobei das Verfahren zur Erzeugung eines hochfrequenten optischen Ausgangssignals (Bout) aus einem niederfrequenten optischen Eingangssignal (Bin) angewandt wird.

**6.** Verfahren nach Anspruch 1,
wobei das Verfahren für die rein optische Taktrückgewinnung angewandt wird.

**7.** Verfahren nach Anspruch 1,
wobei das Verfahren zur Untersuchung der Signalfrequenzkomponenten eines optischen Eingangssignals angewandt wird.

**8.** Verfahren nach Anspruch 5,
wobei das Verfahren zur Erzeugung eines Ausgangsignals im Mikrowellenbereich oder in einem höher Frequenzbereich angewandt wird.

**9.** Verfahren nach Anspruch 4,
wobei das Verfahren zur Messung der Doppelbrechung der optischen Resonatoranordnung angewandt wird.

**10.** Optische Einrichtung zur optischen Signalverarbeitung eines optischen Eingangssignals (Bin), wobei die Einrichtung einen ersten komplexen einpoligen Resonator (OR1) umfasst, der auf eine Wellenlänge des Eingangssignals (Bin) abgestimmt ist,
**dadurch gekennzeichnet,**
**dass** die Einrichtung ferner Folgendes umfasst: eine optische Resonatoranordnung, die eingerichtet ist, um mit zumindest einem Teil des Eingangssignals angeregt zu werden, und wobei die Anordnung wiederum den ersten komplexen einpoligen Resonator (OR1) und ferner einen zweiten unabhängigen optischen Resonator (OR2) umfasst, wobei der zweite optische Resonator (OR2) nicht auf die Wellenlänge abgestimmt ist, wobei die Einrichtung zudem Folgendes umfasst: Polarisations-Trennungsmittel (PBS), die ausgelegt sind, um zumindest ein linear polarisiertes optisches Ausgangssignal (Bout1) von dem Ausgang der optischen Resonatoranordnung zu trennen, so dass beide optischen Resonatoren (OR1, OR2) an der Bildung des linear polarisierten Ausgangssignals (Bout1) beteiligt sind.

**11.** Optische Einrichtung nach Anspruch 10,
wobei der imaginäre Teil eines nicht abgestimmten elektrischen Feldes ($E_y$), das dem ersten Resonator (OR2) entspricht, ausgelegt ist, um unterdrückt zu werden.

**12.** Optische Einrichtung nach Anspruch 10,
wobei es sich bei der Resonatoranordnung im Wesentlichen um eine einzelne Resonatorkavität handelt, wobei die ersten und zweiten unabhängigen Resonatoren (OR1, OR2) basierend auf der Doppelbrechung der einzelnen Kavität als Intrakavitäten-Resonatoren innerhalb der einzelnen Kavität ausgebildet sind.

13. Optische Einrichtung nach Anspruch 10,
    wobei die optische Resonatoranordnung eine oder mehrere Resonatoren vom Fabry-Perot Typ umfasst, in denen das optische Medium eines derartigen einzelnen Resonators zwischen den kavitätenbildenden Reflexionsmitteln angeordnet ist.

14. Optische Einrichtung nach Anspruch 10,
    wobei die optische Resonatoranordnung einen oder mehrere Schleifen- oder Ringresonatoren (OR) umfasst, in denen das optische Medium eines derartigen einzelnen Resonators (OR) als zumindest teilweise geschlossener optischer Ring ausgebildet ist.

15. Optische Einrichtung nach Anspruch 13 oder 14,
    wobei das optische Medium teilweise oder vollständig aus einem der nachstehenden Materialien oder aus Kombinationen davon besteht: festes Material, flüssiges Material, gasförmiges Material oder Vakuum.

16. Optische Einrichtung nach Anspruch 15,
    wobei es sich bei dem festen Material um ein dielektrisches Material oder ein Halbleitermaterial handelt.

17. Optische Einrichtung nach Anspruch 13 oder 14,
    wobei die optische Resonatoranordnung zumindest einen Faser- oder Wellenleiterresonator umfasst.

18. Optische Einrichtung nach Anspruch 10,
    wobei das/die Polarisations-Trennungsmittel (PBS) auf der Verwendung von einem oder mehreren der nachstehenden optischen Mittel basiert/basieren: Wollaston-Prisma, Glan-Foucault-Polarisator, Nicol-Prisma, Rochon-Prisma, dielektrisch beschichteter Polarisator, Drahtgitter-Polarisator, polymerbasierter Dünnschicht-Polarisator, Einzelpolarisations-Modenübertragungsfaser oder photonischer Polarisationskristallsplitter.

19. Optische Einrichtung nach Anspruch 18,
    wobei es sich bei dem Polarisations-Trennungsmittel (PBS) um einen Polarisations-Strahlteiler oder einen Polarisations-Strahlselektor handelt.

20. Optische Einrichtung nach Anspruch 10,
    wobei die Einrichtung ferner Folgendes umfasst: Mittel zur Änderung des Polarisationszustandes des Lichts an einer oder mehreren der nachstehenden Positionen: vor dem Eintritt in die Resonatoranordnung, innerhalb der Resonatoranordnung, nach der Resonatoranordnung, jedoch vor dem Polarisations-Trennungsmittel (PBS), innerhalb des Polarisations-Trennungsmittels (PBS) oder nach dem Polarisations-Trennungsmittel (PBS).

21. Optische Einrichtung nach Anspruch 10,
    wobei die Einrichtung ferner aktive Lichtverstärkungsmittel umfasst.

22. Optische Einrichtung nach Anspruch 21,
    wobei die aktiven Lichtverstärkungsmittel einen optischen Halbleiterverstärker (SOA) umfassen.

23. Optische Einrichtung nach Anspruch 21,
    wobei die aktiven Lichtverstärkungsmittel einen mit seltenen Erden dotierten Wellenleiter umfassen.

24. Optische Einrichtung nach Anspruch 10,
    wobei die Einrichtung teilweise oder vollständig aus optischen Miniaturkomponenten hergestellt ist.

25. Optische Einrichtung nach Anspruch 10,
    wobei die Einrichtung teilweise oder vollständig durch die Verwendung von lichtstreuenden periodischen Mikrostrukturen hergestellt ist.

**Revendications**

1. Procédé de traitement de signal optique d'un signal d'entrée optique (Bin), ledit procédé comprenant l'excitation d'un premier résonateur unipolaire complexe (OR1) en correspondance avec une longueur d'onde du signal d'entrée (Bin), **caractérisé en ce que** ledit procédé comprend en outre

   - l'excitation avec au moins une partie dudit signal d'entrée (Bin) d'un ensemble de résonateur optique qui comprend ledit premier résonateur unipolaire complexe (OR1) et un second résonateur unipolaire complexe indépendant (OR2), dans lequel ledit second résonateur (OR2) n'est pas en correspondance avec ladite longueur d'onde, et
   - sur la base de la polarisation, la séparation de la sortie dudit ensemble de résonateur optique d'au moins un signal de sortie optique polarisé linéairement (Bout1) afin que lesdits premier et second résonateurs (OR1, OR2) dudit ensemble de résonateur optique contribuent à la formation dudit signal de sortie polarisé linéairement (Bout1).

2. Procédé selon la revendication 1, dans lequel la partie imaginaire d'un champ électrique non adapté ($E_y$) correspondant audit second résonateur (OR2) est supprimée.

3. Procédé selon la revendication 1, dans lequel le signal d'entrée optique (Bin) est sensiblement cohérent et à mode bloqué avec l'ensemble de résonateur optique.

4. Procédé selon la revendication 1, dans lequel ledit ensemble de résonateur est sensiblement une cavité résonnante unique dans laquelle lesdits premier et second résonateurs indépendants (OR1, OR2) sont formés comme des résonateurs intracavitaires dans ladite cavité unique sur la base de la biréfringence de ladite cavité unique.

5. Procédé selon la revendication 1, dans lequel ledit procédé est appliqué afin de générer un signal de sortie optique à fréquence plus élevée (Bout) à partir d'un signal d'entrée optique à fréquence plus faible (Bin).

6. Procédé selon la revendication 1, dans lequel ledit procédé est appliqué à une récupération d'horloge entièrement optique.

7. Procédé selon la revendication 1, dans lequel ledit procédé est appliqué afin d'analyser les composantes de fréquence d'un signal d'entrée optique.

8. Procédé selon la revendication 5, dans lequel ledit procédé est appliqué afin de générer un signal de sortie dans une plage de fréquences micro-ondes ou une plage de fréquences plus élevées.

9. Procédé selon la revendication 4, dans lequel ledit procédé est appliqué à la mesure de la biréfringence dudit ensemble de résonateur optique.

10. Dispositif optique destiné au traitement de signal optique d'un signal d'entrée optique (Bin), dans lequel ledit dispositif comprend un premier résonateur unipolaire complexe (OR1) en correspondance avec une longueur d'onde du signal d'entrée (Bin), **caractérisé en ce que** ledit dispositif comprend en outre un ensemble de résonateur optique disposé afin d'être excité avec au moins une partie dudit signal d'entrée, et ledit ensemble comprend à son tour ledit premier résonateur unipolaire complexe (OR1) ainsi qu'un second résonateur optique indépendant (OR2), dans lequel ledit second résonateur optique (OR2) n'est pas en correspondance avec ladite longueur d'onde, ledit dispositif comprenant en outre un moyen de séparation de polarisation (PBS) adapté afin de séparer, à partir de la sortie dudit ensemble de résonateur optique, au moins un signal de sortie optique polarisé linéairement (Bout1) afin que les deux résonateurs optiques (OR1, OR2) contribuent à la formation dudit signal de sortie polarisé linéairement (Bout1).

11. Dispositif optique selon la revendication 10, dans lequel la partie imaginaire d'un champ électrique non adapté ($E_y$) correspondant audit second résonateur (OR2) est prévue afin d'être supprimée.

12. Dispositif optique selon la revendication 10, dans lequel ledit ensemble de résonateur est sensiblement une cavité résonnante unique dans laquelle lesdits premier et second résonateurs indépendants (OR1, OR2) sont formés comme des résonateurs intracavitaires dans ladite cavité unique sur la base de la biréfringence de ladite cavité unique.

**13.** Dispositif optique selon la revendication 10, dans lequel ledit ensemble de résonateur optique comprend un ou plusieurs résonateur(s) Pérot-Fabry dans lesquels le support optique d'un seul résonateur est disposé entre des moyens de réflexion formant cavité.

**14.** Dispositif optique selon la revendication 10, dans lequel ledit ensemble de résonateur optique comprend un ou plusieurs résonateur(s) en boucle ou en anneau (OR) dans lesquels le support optique d'un seul résonateur (OR) est disposé afin de former au moins un cercle optique partiellement fermé.

**15.** Dispositif optique selon les revendications 13 ou 14, dans lequel ledit support optique se compose partiellement ou entièrement de l'un des matériaux suivants ou de leur combinaison : matériau solide, matériau liquide, matériau gazeux ou vide.

**16.** Dispositif optique selon la revendication 15, dans lequel ledit matériau solide est un matériau diélectrique ou un matériau semi-conducteur.

**17.** Dispositif optique selon les revendications 13 ou 14, dans lequel ledit ensemble de résonateur optique comprend au moins un résonateur à fibre ou à guide d'ondes.

**18.** Dispositif optique selon la revendication 10, dans lequel le(s)dit(s) moyen de séparation de polarisation (PBS) est / sont basé(s) sur l'utilisation d'un ou plusieurs des éléments optiques suivants : un prisme de Wollaston, un polarisateur de Glan-Foucault, un prisme de Nicol, un prisme de Rochon, un polarisateur à revêtement diélectrique, un polarisateur à grillage, un polarisateur à film à base de polymère, une fibre de transmission à mode de polarisation unique ou un séparateur de polarisation à cristal photonique.

**19.** Dispositif optique selon la revendication 18, dans lequel ledit moyen de séparation de polarisation (PBS) est un séparateur de faisceau de polarisation ou un sélecteur de faisceau de polarisation.

**20.** Dispositif optique selon la revendication 10, dans lequel ledit dispositif comprend en outre un moyen de modification de l'état de polarisation de la lumière dans une ou plusieurs des positions suivantes : avant d'entrer dans l'ensemble de résonateur, dans l'ensemble de résonateur, après l'ensemble de résonateur mais avant le moyen de séparation de polarisation (PBS), dans le moyen de séparation de polarisation (PBS) ou après le moyen de séparation de polarisation (PBS).

**21.** Dispositif optique selon la revendication 10, dans lequel ledit dispositif comprend en outre un moyen d'amplification de la lumière actif.

**22.** Dispositif optique selon la revendication 21, dans lequel ledit moyen d'amplification de la lumière actif comprend un amplificateur optique à semi-conducteurs (SOA).

**23.** Dispositif optique selon la revendication 21, dans lequel ledit moyen d'amplification de la lumière actif comprend un guide d'ondes dopé aux terres rares.

**24.** Dispositif optique selon la revendication 10, dans lequel ledit dispositif est partiellement ou complètement fabriqué à partir de composants optiques miniaturisés.

**25.** Dispositif optique selon la revendication 10, dans lequel ledit dispositif est partiellement ou complètement fabriqué à l'aide de microstructures périodiques à diffusion de la lumière.

Fig. 1

Fig. 2

Fig. 3

Fig. 4

EP 1 683 284 B1

Fig. 5

EP 1 683 284 B1

Fig. 6

Fig. 7

Fig. 8

Fig. 9

Fig. 10

Fig. 11

Fig. 12

Fig. 13

Fig. 14

Fig. 15

Fig. 16

Fig. 17

EP 1 683 284 B1

Fig. 18

## Fig. 19

Fig. 20

Fig. 21

EP 1 683 284 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4737970 A
- US 5446573 A
- US 6028687 A
- US 6388753 B
- US 6338753 B

### Non-patent literature cited in the description

- **AZAÑA ; CHEN.** *IEEE Photonic Technology Letters,* 2002, vol. 14
- **LENZ et al.** *IEEE J. Quantum Electron.,* August 1998, vol. 34
- **JINNO ; MATSUMOTO.** *IEEE J. Quantum Electron.,* 04 April 1992